# EUROPEAN PATENT APPLICATION

(11) **EP 4 576 833 A1**
(43) Date of publication of application: **25.06.2025**
(21) Application number: 23219592.5
(22) Date of filing: 22.12.2023
(51) Int. Cl.: H04S 7/00

(54) **AUDIO SYSTEM AND METHOD FOR HRTF ESTIMATION**

(71) Applicant: GN Hearing A/S, 2750 Ballerup (DK)
(72) Inventor: OLSSON, Rasmus Kongsgaard, 2750 Ballerup (DK); UDESEN, Jesper, 2750 Ballerup (DK)
(74) Representative: Aera A/S

(57) **Abstract**

A method for estimation of one or more audio spatialization parameters for a specific user, a training method and an audio system is provided, wherein the estimation method comprises obtaining audio data comprising first second audio data by obtaining the first audio data from a first microphone arranged near, in, or at a first ear canal of the target user and the second audio data from a second microphone arranged near, in, or at a second ear canal of the target user; and providing the one or more audio spatialization parameters comprising: applying a model to the audio data for provision of a parameter estimate of the one or more audio spatialization parameters; determining the one or more audio spatialization parameters based on the parameter estimate; and outputting the one or more audio spatialization parameters.

## Description

The present disclosure relates to an audio system and related methods, in particular for analysing, monitoring and/or estimating transfer functions and/or audio spatialization parameters related to a user of an audio device, such as head-related transfer functions. In particular, an audio system and a method for estimation of one or more audio spatialization parameters is disclosed together with a computer-implemented method for training a machine learning model for provision of audio spatialization parameters.

### BACKGROUND

Within the technical field of spatial audio it is considered key to have access to a personalized Head-Related-Transfer-Function (HRTF) data set. Such data set can be thought of as the unique acoustic fingerprint of the outer ear(s) of a user and their positions relative to the user's head. When the personalized HRTFs are carefully measured on a specific user, reproduction of high-quality spatial audio sounding nearly identical to sound from real physical sound sources is made easier for this user. This contrasts with generic HRTFs which may e.g. be measured on dummy heads and generally result in lower quality of the spatial audio.

As a consequence, usage of audio devices that rely on individual HRTFs comes with a requirement that the users have spent the time and effort to have their HRTFs measured. The process to measure a person's HRTF typically involves producing stimuli from different directions and measuring the responses from microphones arranged in the ears. A typical recording procedure requires a very expensive setup and takes at least 30 minutes.

One simplifying alternative to applying individualized HRTFs is to apply a best average HRTF derived from a population of people. The downside to the simplification is that individual spatial perception deteriorates, i.e. sounds are perceived as coming from other points than intended.

### SUMMARY

Accordingly, there is a need for audio systems, electronic devices, and methods providing improved spatial audio generation.

A method, performed e.g. in an audio system comprising one or more processors, for estimation of one or more audio spatialization parameters for a specific target user is disclosed, wherein the method comprises obtaining audio data comprising first and second audio data, the method further comprising obtaining the first audio data from a first microphone e.g. arranged near, in, or at a first ear canal of the target user, and the second audio data from a second microphone e.g. arranged near, in, or at a second ear canal of the target user; and providing the one or more audio spatialization parameters. Providing the one or more audio spatialization parameters comprises applying, e.g. using an audio device or an accessory device, a model to the audio data for provision of a parameter estimate of the one or more audio spatialization parameters and determining the one or more audio spatialization parameters based on the parameter estimate. The method comprises outputting the one or more audio spatialization parameters.

Further, an audio system is disclosed. The audio system comprises one or more processors, wherein the one or more processors are configured to obtain audio data comprising first and second audio data by obtaining the first audio data from a first microphone, e.g. arranged near, in, or at a first ear canal of the target user, and the second audio data from a second microphone, e.g. arranged near, in, or at a second ear canal of the target user; and provide one or more audio spatialization parameters. To provide one or more audio spatialization parameters comprises to apply a model to the audio data for provision of a parameter estimate of the one or more audio spatialization parameters, and determine the one or more audio spatialization parameters based on the parameter estimate. The one or more processors are configured to output, such as transmit and/or store, e.g. for later retrieval by the target user, the one or more audio spatialization parameters.

Further, a computer-implemented method for training a machine learning model to process as input audio data comprising first audio data indicative of a first audio signal from a first microphone and second audio data indicative of a second audio signal from a second microphone and provide as output a parameter estimate of one or more audio spatialization parameters is provided. The method comprises determining obtaining, by a computer, for each training user, one or more audio spatialization parameters; obtaining, by a computer, for each training user, a first sound input location near, in, or at a first ear canal of the training user and a second sound input location near, in or at a second ear canal of the training user; obtaining, by a computer, for each training user, multiple training input sets, wherein each training input set represents a specific sound environment and a specific time period and comprises a first audio input signal and a second audio input signal, each representing environment sound from the specific sound environment in the specific time period at respectively the first sound input location and the second sound input location; and training the machine learning model by executing, by a computer, multiple training rounds spanning the multiple training input sets obtained for the plurality of training users, wherein each training round comprises applying the machine learning model to one of the multiple training input sets obtained for the respective training user and adjusting parameters, such as weights or other parameters, of the machine learning model using the one or more audio spatialization parameters obtained for the respective training user as target output of the machine learning model.

It is an advantage of the present disclosure that more accurate and precise HRTFs are provided, which in turn may lead to improved spatial audio generation. Further, customized HRTFs may be provided without involving a highly specialized and time-consuming HRTF determination in an audio lab.

Further, the present disclosure provides an improved machine-learning/neural network model architecture which efficiently handles and analyses audio from ear-worn microphones.

Further, the present disclosure provides improved simplicity in HRTF modelling/estimation/determination by leveraging audio data obtained during normal use of an audio device.

Training of the model or models disclosed herein rely on receiving at specific locations in real or virtual space real or simulated sound produced at specific other locations in real or virtual space, wherein such locations are defined relative to a real or simulated training user. Similarly, a real target user's use of the model for estimation of one or more audio spatialization parameters relies on receiving at specific locations in real space real sound produced at specific other locations in real space, wherein such locations are defined relative to the real target user. To achieve the desired results, all such locations should be defined relative to a common reference system in real and/or virtual space.

A preferred reference system is a three-dimensional coordinate system that is fixed with respect to the head of each respective training user or target user, such that its origin is located at the intersection of the sagittal plane and the coronal plane of the head at the height of the respective entrances to the ear canals, its first axis "X" extends in the coronal plane and orthogonally to the sagittal plane in a rearwards direction of the head, its second axis "Y" extends in the sagittal plane and orthogonally to the coronal plane in a front direction of the head, and its third axis "Z" extends along the intersection of the sagittal plane and the coronal plane in an upwards direction of the head. In the following, all mentioned spatial locations or directions are relative to this preferred reference system. Obviously, other reference systems may be used, and transformations between different reference systems may be applied where required. For instance, the upwards direction may be determined from features of the pinnae of each training user or target user. Minor deviations between reference systems, such as deviations caused by measurement errors in real space, may be ignored, which may, however, reduce the accuracy of the estimation of one or more audio spatialization parameters.

When a person is subjected to sound from a sound source in their environment, the sound received at respectively the person's left ear canal and the person's right ear canal, and which is thus perceived by the person, depends on the size and shape of the person's head and ears, on the size, shape, and relative location of the respective pinnas, and on the dimensions of the respective ear canals. All these head- and ear-related features contribute to modify the received sound to contain spatial cues that enable a normal-hearing person to determine the location of sound sources by processing the received sound. Such spatial cues are well known in the art and comprises various modifications of the received sound, such as shadow effects, interaural level differences (ILD), interaural time differences (ITD), as well as peaks, troughs, and phase shifts at specific frequencies caused by constructive and destructive interference. Roughly speaking, shadow effects and interaural cues mainly enable determination of the distance to the source and the angle of incident relative to the sagittal plane, while the other, finer spatial cues mainly enable front-rear disambiguation and determination of the angle of elevation.

The fact that the mentioned head- and ear-related features may differ significantly between individual persons indicate that directional hearing to a large degree is a learned skill. Nevertheless, it has been established that the properties of the mentioned features also tend to be governed by so-called "archetypes" so that large groups of persons exist for whom, for instance, the shape of their pinnas is very similar. There will thus also be at least partial similarities between the HRTFs of the persons in such a group. In addition, shadow effects and interaural differences depend to a large degree in a simple way from the head's size and shape as well as from the relative location of the pinnas.

When a person is in an environment with multiple sound sources spatially distributed around that person, such as in a large office with other people, and when those sound sources move relative to that person's head, then the sound from the sound sources will over a time period reach the person and the person's ear canals from varying directions, possibly also via reflections, and at times from multiple directions at the same time. In such a scenario, the sound received at the left and right ear canals of that person during that time period will exhibit a variety of spatial cues indicating a variety of relative locations of sound sources.

The present invention provides or utilizes a machine learning model (a model), that, simply said, is trained to analyse sound received at respective sound input locations near, in or at the left and the right ear canal of a person in one or more sound environments during one or more time periods and to provide a corresponding estimate of one or more parameters (audio spatialization parameters) of that person's HRTFs. These sound input locations are in the following referred to as "target sound input locations". A target user of an end-user device implementing such a model may thus wear the end-user device near, in or at their ears during one or more time periods in which the model analyses the sound received by respective microphones of the end-user device and eventually provides an estimate of one or more audio spatialization parameters for that target user. In the following, the term "target device" refers to such an end-user device that comprises a model as described herein that enables the end-user device to analyse sound received by its microphones when worn by the target user and provide an estimate of one or more audio spatialization parameters for the target user. A target device may optionally further comprise one or more processors for provision of spatialized audio to the target user by providing an audio output based on the one or more audio spatialization parameters.

Generally, to enable reproduction of high-quality spatial audio, an HRTF for a specific sound source location and a specific ear is preferably determined such that it defines the transfer function between the sound source location and the location of the center of the tympanum of that ear. For the same purpose, the model is preferably trained to estimate the audio spatialization parameters such that they correspond to such source-to-tympanum transfer functions. Alternatively, the model may be trained to estimate the audio spatialization parameters such that they correspond to other transfer functions, such as source-to-ear-canal or source-to-concha transfer functions, which, however, may lower the quality of audio spatialized based on the estimated audio spatialization parameters. Ideally, and for similar reasons, the sound input locations used for training the model, in the following referred to as "training sound input locations", would be at the center of the tympanum of each ear. However, the shape and size of the ear canals generally have only minor influence on a persons' directional hearing, and it is therefore generally more important that the training sound input locations correspond with the target sound input locations. When properly trained, the model will at least partly compensate for the sound input locations being offset from the respective tympani. That said, choosing training sound input locations far outside the ear canals, such as on the laterally outer sides of over-the-ear earcups, will likely result in the spatial cues in the sounds at the sound input locations correlating less with the spatial cues in the sounds at the respective tympani and will thus likely also reduce the correlation between the estimated audio spatialization parameters and the true HRTFs of the target user.

The model is trained by a training computer using as target output for the model one or more audio spatialization parameters obtained for each of multiple training users. Any subset of the training users may be real person(s) for which such audio spatialization parameters have been determined based on acoustic measurement of sound received near, in or at the respective training user's ear canals, and/or based on acoustic, optical or mechanical measurement of features of the training user's head and/or ears. Alternatively, or additionally, any subset of the training users may be simulated person(s) having artificially generated head- and ear-related features, and for whom such audio spatialization parameters have been determined based on simulation of sound fields and/or sound propagation. The multiple training users preferably comprise real persons and/or simulated persons that together cover a variation of head- and ear-related features corresponding to the variation expected among the intended target users. For any one of the multiple training users, the training computer may itself determine the one or more audio spatialization parameters. Alternatively, or additionally, the training computer may obtain all or some of the one or more audio spatialization parameters from one or more databases, optionally stored on one or more other computers, and/or determine all or some of the one or more audio spatialization parameters by modifying other audio spatialization parameters obtained from such databases.

For each training user, the training computer obtains a respective sound input location near, in, or at each of the training user's - real or simulated - ear canals. Each such sound input location is preferably chosen to be within the respective ear canal, within 3 mm of the entrance to the ear canal, within 6 mm of the entrance to the ear canal, or within 15 mm of the entrance to the ear canal. For a real-person training user, the sound input locations preferably correspond to the locations of respective sound inputs to the microphones of the target device. The sound input locations may be determined based on acoustic, optical, or mechanical measurement of the locations of the respective sound inputs of the target device that receive the sound to be analysed by the model when the training user wears the target device. For a simulated training user, the sound input locations preferably correspond to locations computed from training-user data, such as head size as well as size, shape and position of each of the training user's ears, and from target device data, such as the size, shape and position of a simulated target device and/or relative locations of respective target sound input locations.

Both for real and for simulated training users, smaller deviations between the training sound input locations and the target sound input locations may at least partly be compensated for by the trained model, while larger deviations may result in reduced correlation between the estimated audio spatialization parameters and the true HRTFs of the target user.

### BRIEF DESCRIPTION OF THE DRAWINGS

The above and other features and advantages of the present invention will become readily apparent to those skilled in the art by the following detailed description of exemplary embodiments thereof with reference to the attached drawings, in which:
Fig. 1 schematically illustrates an exemplary audio system according to the present disclosure,
Fig. 2 schematically illustrates exemplary parts of an audio system according to the present disclosure,
Fig. 3 schematically illustrates exemplary parts of an audio system according to the present disclosure,
Fig. 4 is a flow diagram of an exemplary method according to the present disclosure, and
Fig. 5 is a flow diagram of an exemplary method according to the present disclosure.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

An audio system is disclosed. The audio system comprises one or more processors optionally distributed between one or more devices of the audio system.

The audio system may comprise an audio device comprising a first earpiece and a second earpiece. The audio device may be a listening device, a hearable, a headset, an ear protection device, ear plugs, a hearing aid, a hearing device set, or any combination hereof.

The present disclosure relates to a method, such as a method for estimation of one or more audio spatialization parameters for a specific target user. The method may be performed in an audio system comprising one or more processors and comprises obtaining, such as one or more of receiving and retrieving, audio data from microphones arranged near, in, or at an ear canal of the target user. The audio data may have a duration of at least 10 minutes, such as at least 20 minutes. In one or more examples, the audio data has a duration of at least 30 minutes. In other words, the audio data may represent audio being recorded over a time period of at least 10 minutes or at least 20 minutes, such as at least 30 minutes.

Obtaining audio data comprising first audio data and second audio data optionally comprises obtaining, e.g. using a target device, such as a listening device, a hearable, a headset, an ear protection device, ear plugs, a hearing aid, or a hearing device, the first audio data from a first microphone, e.g. arranged near, in, or at a first ear canal of the target user, and the second audio data from a second microphone, e.g. arranged near, in, or at the first ear canal or a second ear canal of the target user. The first microphone has a sound input at a first target sound input location, and the second microphone has a sound input at a second target sound input location. The method comprises providing the one or more audio spatialization parameters and outputting the one or more audio spatialization parameters. Providing the one or more audio spatialization parameters may comprise applying a model to the audio data for provision of a parameter estimate of the one or more audio spatialization parameters and determining the one or more audio spatialization parameters based on the parameter estimate.

In one or more examples, a method for estimation of one or more audio spatialization parameters for a specific target user is disclosed, wherein the method comprises obtaining audio data comprising first and second audio data by obtaining the first audio data from a first microphone arranged near, in, or at a first ear canal of the target user and the second audio data from a second microphone arranged near, in, or at a second ear canal of the target user; and providing the one or more audio spatialization parameters comprising applying a model to the audio data for provision of a parameter estimate of the one or more audio spatialization parameters, and determining the one or more audio spatialization parameters based on the parameter estimate; and outputting the one or more audio spatialization parameters. The first microphone has a sound input at a first target sound input location, and the second microphone has a sound input at a second target sound input location.

In one or more examples, determining the one or more audio spatialization parameters based on the parameter estimate may comprise using the parameter estimate as the one or more spatialization parameters.

In one or more examples, obtaining audio data comprises filtering, e.g. using an echo canceller and/or a feedback suppression algorithm, the first audio data to remove a first speaker audio component from a first speaker arranged near, in, or at the first ear canal of the target user.

In one or more examples, obtaining audio data comprises filtering, e.g. using an echo canceller and/or a feedback suppression algorithm, the second audio data to remove a second speaker audio component from a second speaker arranged near, in, or at the first ear canal or the second ear canal of the target user.

In one or more examples, the method comprises detecting, e.g. based on the audio data, presence of the voice of the target user, and in accordance with detecting presence of the voice, forgoing, such as stopping, pausing, and/or deactivating, obtaining audio data. In other words, audio comprising voice of the target user is optionally omitted, not recorded, or not included in the audio data thereby e.g. optimizing memory and processing resources in the audio system. Thereby, the target user's own voice is excluded from the audio data, thereby improving the HRTF estimation.

In one or more examples, the method comprises detecting, e.g. based on the audio data, a sound parameter, such as a level parameter, and in accordance with the sound parameter satisfying a sound criterion, forgoing, such as stopping, pausing, and/or deactivating, obtaining audio data. In other words, audio or sounds that are not of sufficient quality and/or level in order to be input to the model can be omitted or not included in the audio data, thereby e.g. optimizing memory and processing resources in the audio system. The method may comprise, e.g. in accordance with the sound parameter satisfying the sound criterion, outputting an audio tone and/or message to the target user. The audio tone and/or message may prompt the target user to move to a more suitable environment for recording audio data. The audio tone and/or message may be indicative of a poor sound environment.

In one or more examples, providing the one or more audio spatialization parameters comprises determining whether the parameter estimate satisfies a first criterion and wherein determining the one or more audio spatialization parameters is performed in accordance with a determination that the first criterion is satisfied. For example, the first criterion may be designed to secure that outliers in the parameter estimate does not form basis of audio spatialization parameter(s).

In one or more examples, determining whether the parameter estimate satisfies a first criterion comprises determining a variance parameter, e.g. based on the parameter estimate and/or historic (previous) audio spatialization parameters, and determine if the variance parameter satisfies a variance criterion, e.g. if the variance parameter is less than a variance threshold or if the variance parameter is larger than a variance threshold. In one or more examples, the first criterion may be satisfied or at least partly satisfied if the variance criterion is satisfied.

In one or more examples, determining whether the parameter estimate satisfies a first criterion comprises determining whether a quality parameter of the parameter estimate meets a threshold. In other words, the first criterion may be satisfied or at least partly satisfied if a quality parameter meets a threshold.

In one or more examples, determining whether the parameter estimate satisfies a first criterion comprises determining a time parameter and determine if the time parameter satisfies a time criterion. In one or more examples, the time parameter may indicate a time since start of recording/obtaining first audio data and second audio data. In other words, the first criterion may be satisfied or at least partly satisfied if the time criterion is satisfied. For example, the time parameter may be indicative of a duration, such as an accumulated duration, of audio data. A first time parameter in combination with a quality parameter may allow optimized, such as reduced, time required for determining audio spatialization parameters. A first time parameter in combination with a quality parameter may secure that the obtained audio data have a sufficient duration to arrive at an accurate parameter estimate. For example, a small duration combined with high quality may be sufficient while a lower quality may require a longer duration.

In one or more examples, outputting the one or more audio spatialization parameters comprises storing the one or more audio spatialization parameters in memory and/or transmitting the one or more audio spatialization parameters, e.g. to an audio device, such as a listening device, a hearable, a headset, an ear protection device, ear plugs, a hearing device.

In one or more examples, the one or more audio spatialization parameters comprise one or more of an interaural level difference, an interaural level difference gram, a condensed interaural level difference gram, a dual logs abs HRTF, an interaural time difference, an interaural time difference gram, and a condensed interaural time difference gram(s).

The parameter estimate may comprise one or more of an interaural level difference, an interaural level difference gram, a condensed interaural level difference gram, a dual logs abs HRTF, an interaural time difference, an interaural time difference gram, and a condensed interaural time difference gram(s).

The one or more audio spatialization parameters may e.g. indicate a time delay for a left-ear/first filter and/or a right-ear/second filter of the audio device. Alternatively, or additionally, the one or more audio spatialization parameters may indicate a signal gain (or attenuation) for the left-ear/first filter and/or the right-ear/second filter of the audio device. Any or both of the time delay and the signal gain may be specified as a scalar value to be applied to the target audio signal as a whole, as a set of scalar values to be applied to different frequency ranges of the target audio signal, and/or as a (discrete or continuous) transfer function to be applied to the target audio signal as a whole.

Alternatively, or additionally, the one or more audio spatialization parameters may indirectly indicate such values and/or functions in the form of geometric values related to the shape of the respective target user's head and/or ears, such as e.g. the distance between the ears, dimensions of the head, the locations of the ears relative to the head, dimensions of the outer ears, etc.

In one or more examples, determining the one or more audio spatialization parameters based on the parameter estimate may comprise transforming or mapping an output of the model to one or more spatialization parameters to be used in an audio device.

In one or more examples, the model is a neural network configured to receive a first complex spectrogram based on the first audio data as first input and a second complex spectrogram based on the second audio data as second input, the neural network configured to provide an output comprising the parameter estimate based on the first complex spectrogram and the second complex spectrogram. In other words, the first audio data may be represented by or transformed to a first complex spectrogram and the second audio data may be represented by or transformed to a second complex spectrogram. In one or more examples, the neural network, such as a dilated convolutional neural network, may be configured to take as input direct audio samples e.g. having a duration of at least 10 minutes, such as 30 minutes.

In one or more examples, the neural network is a dilated convolutional neural network to reduce the computational effort required by the neural network.

Further, a method performed by an electronic device for provision of spatialized audio to a specific target user is disclosed, wherein the method comprises performing the method, such as the method for estimation of one or more audio spatialization parameters for a specific target user, disclosed herein; and providing an audio output based on the one or more audio spatialization parameters.

Further, an electronic device, such as an audio device is disclosed, the electronic device comprising one or more processors, wherein the electronic device/one or more processors is configured to perform any of the methods as described herein. The electronic device may be a target device.

The audio device optionally comprises one or more speakers, also denoted loudspeakers or receivers, for output of audio to the first ear canal and/or the second ear canal of the target user. The audio device may comprise a first earbud configured to be arranged in, near or at first ear canal of the target user. In one or more examples, the first earbud comprises the first microphone and optionally a first speaker. The audio device may comprise a second earbud configured to be arranged in, near or at second ear canal of the target user. In one or more examples, the second earbud comprises the second microphone and optionally a second speaker.

An audio system comprising one or more processors is disclosed, wherein the one or more processors are configured to obtain audio data comprising first and second audio data by obtaining the first audio data from a first microphone arranged in or at a first ear canal of the target user and the second audio data from a second microphone arranged in or at a second ear canal of the target user; provide one or more audio spatialization parameters by applying a model to the audio data for provision of a parameter estimate of the one or more audio spatialization parameters and determining the one or more audio spatialization parameters based on the parameter estimate; and output the one or more audio spatialization parameters. The first microphone has a sound input at a first target sound input location, and the second microphone has a sound input at a second target sound input location.

In one or more exemplary audio systems, the model implemented by the one or more processors, such as a neural network, is configured to estimate or determine the parameter estimate based on the audio data.

The audio system may comprise an audio device and an accessory device. The one or more processors may be a part of an audio device, a part of an accessory device, such as a mobile phone, tablet computer, personal computer, or a part of a server device. The one or more processors may be distributed between an audio device and one or more accessory devices and/or distributed between accessory devices. The one or more processors may be a part of a target device.

In one or more exemplary audio systems, the one or more processors comprise or implement a pre-processor configured to pre-process the audio data and provide a neural network input to the neural network based on the audio data, such as the first audio data and the second audio data. The pre-processor may be arranged in the audio device and/or in the accessory device.

In one or more exemplary audio systems, the pre-processor is configured to determine a first real spectrogram also denoted P_R_1 of the first audio data and a first imaginary spectrogram P_I_1 of the first audio data and provide the first real spectrogram P_R_1 and the first imaginary spectrogram P_I_1 in the input to the model, such as the neural network input. In one or more exemplary audio systems, the pre-processor is configured to determine a second real spectrogram also denoted P_R_2 of the second audio data and a second imaginary spectrogram P_I_2 of the second audio data and provide the second real spectrogram P_R_2 and the second imaginary spectrogram P_I_2 in the input to the model, such as the neural network input.

The audio device preferably comprises an A/D converter or a plurality of A/D converters, such as one for each microphone, for digitizing the audio signals from the respective microphones for provision of the audio data. In some exemplary audio systems, A/D conversion may be made in the first earbud and in the second earbud.

To determine real and imaginary spectrograms may comprise sampling audio data with a sampling rate larger than 8 kHz, such as at least 16 kHz, e.g. in the range from 6 kHz to 40 kHz, such as 32 kHz.

The real and imaginary spectrograms may each comprise at least 128 values, such as 256 values for respective 256 frequency bands or bins, and may be based on a Hahn window with a frame size of 512 samples, e.g. with a hop size of 256 samples and/or 50% overlap.

The neural network input may comprise K real and imaginary spectrograms for the audio data, wherein K is selected such that the spectrograms represent at least 10 minutes such as at least 20 minutes of audio. In other words, the neural network input may comprise K_1 real and K_1 imaginary spectrograms for the first audio data as well as K_2 real and K_2 imaginary spectrograms for the second audio data, wherein K_1 and K_2 are preferably equal to K. In one or more examples the audio data may be represented by real and imaginary spectrograms. Thereby the audio data can be represented in a substantially loss-less representation advantageously maintaining both phase and amplitude which are important parameters in determining audio spatialization parameters.

In one or more exemplary audio systems, the one or more processors comprise or implements an ASP controller, wherein the ASP controller is configured to determine the one or more audio spatialization parameters (ASPs) based on the parameter estimate (PE) being output from the model. The ASP controller may function as a post-processor configured to post-process a neural network output, such as a parameter estimate from the neural network and provide the ASPs based on the neural network output. In one or more exemplary audio systems, the parameter estimate may be used as ASPs.

The ASP controller may be configured to determine whether the parameter estimate is a valid estimate, e.g. whether the parameter estimate satisfies a first criterion, such as that the parameter estimate is a plausible estimate for a real person, and/or that the parameter estimate is a plausible estimate for the target user based on other data obtained for the target user, and wherein determining the one or more audio spatialization parameters and/or outputting the one or more audio spatialization parameters ASPs are performed in accordance with a determination that the parameter estimate is valid, e.g. in accordance with a determination that the first criterion is satisfied. Thereby improved ASP determination is provided for by avoiding using inaccurate, wrong, or otherwise invalid parameter estimates for determining the ASPs. To determine whether the parameter estimate is valid, such as satisfies a first criterion, optionally comprises determining whether a quality parameter of the parameter estimate meets a threshold. In other words, the ASP controller may be configured to determine a quality parameter indicative of the quality of the parameter estimate and determine the ASPs in accordance with the quality of the parameter estimate being sufficiently good, e.g. if the quality parameter meets a threshold.

To determine whether the parameter estimate is valid, such as satisfies a first criterion, optionally comprises determining a time parameter, e.g. based on the audio data, and determine if the time parameter satisfies a time criterion. In other words, the ASP controller may be configured to determine if the audio data has a sufficient time span or duration. In one or more examples, the quality parameter and the time parameter may be combined in the determination of whether the parameter estimate is valid. The time parameter may indicate time since start of recording or start of audio data. The time parameter may indicate duration of audio data.

To determine whether the parameter estimate is valid, such as satisfies a first criterion, optionally comprises determining whether the parameter estimate corresponds to one or more ASPs that are likely to be representative of an actual person. For instance, an interaural time difference exceeding 1.5 ms can only occur if the distance between the ears of a target user exceeds about 0.5 m, which is clearly not applicable to any living person.

In one or more exemplary audio systems, the neural network of the model is a deep neural network, comprising multiple components, such as one or more convolutional neural networks (CNN), one or more dense layers, one or more transformers, and/or one or more recurrent networks, such as Long Short-Term Memory (LSTM) recurrent networks. A convolutional neural network may comprise an input, a number J of layers, and an output. The J layers may comprise J_C convolution layers denoted CONV_j, j=1, 2, ..., J_C, including a first convolution layer CONV_1 and a second convolution layer CONV_2, and J_O output layers including a first output layer OUT_1 and optionally a second output layer OUT_2. The first output layer OUT_1 may be a fully connected output layer and/or the second output layer OUT_2 may be a fully connected output layer. The J_O output layers may preferably follow the J_C convolution layers.

The input to the neural network may comprise complex spectrograms, e.g. real and imaginary spectrograms, of the audio data AD_1 and AD_2. The output of the model, such as the neural network, comprises a parameter estimate PE. The parameter estimate optionally comprises one or more first parameter estimates associated with the first audio spatialization parameters. The first audio spatialization parameters may be or comprise a first HRTF or be indicative of a first HRTF associated with a first ear or first ear canal of the target user. In one or more examples, the first audio spatialization parameters ASP_1 comprises one or more coefficients or filter settings for a filter implementing the first HRTF. The output of the neural network may comprise an ILD gram and/or dual log abs HRTF. The output of the neural network may comprise an ITD gram or condensed version thereof.

The parameter estimate optionally comprises one or more second parameter estimates associated with the second audio spatialization parameters. The second audio spatialization parameters may be or comprise a second HRTF or be indicative of a second HRTF associated with a second ear or second ear canal of the target user. In one or more examples, the second audio spatialization parameters ASP_2 comprises one or more coefficients or filter settings for a filter implementing the second HRTF.

In one or more example convolutional neural networks, the number of convolutional layers is in the range from 5 to 15, such as from 10 to 12. One or more of the convolutional layers may have a kernel dimension of 3x3. One or more of the convolutional layers may have a stride of 2,1. One or more of the convolutional layers may have a stride of 1,1. One or more of the convolutional layers may have a dilation of 1,2. One or more of the convolutional layers may have a dilation of 1,4. One or more of the convolutional layers may have a dilation of 1,8.

The numbers of layers, such as the total number of layers in the neural network, the number J_C of convolution layers, and/or the number J_O of output layers, may be varied to improve performance and/or reduce power consumption. The same applies to the properties of the audio data, such as sample rates, the number of spectrogram bins, frame sizes, window overlap and length of spectrogram buffers, as well as to the properties of individual network layers, such as kernel dimensions, stride and dilation. Typically, a larger neural network will be required for a larger number of microphones, e.g. for an implementation with a plurality of first microphones arranged at the first ear canal and/or a plurality of second microphones arranged at the second ear canal.

It is noted that descriptions of the audio system herein also apply to a corresponding method for estimation of one or more audio spatialization parameters for a specific user and vice versa.

Also, a computer-implemented method for training a machine learning model, such as a neural network, to process as input audio data comprising first audio data indicative of a first audio signal from a first microphone and second audio data indicative of a second audio signal from a second microphone and provide as output a parameter estimate of one or more audio spatialization parameters is provided, wherein the method comprises obtaining, by a computer for each training user of a plurality of training users, one or more audio spatialization parameters; obtaining, by a computer, for each training user, a first sound input location near, in, or at a first ear canal, such as a left ear canal, of the training user and a second sound input location near, in or at a second ear canal, such as a right ear canal, of the training user; obtaining, by a computer, for each training user, multiple training input sets, wherein each training input set represents a specific sound environment and a specific time period and comprises a first audio input signal and a second audio input signal, each representing environment sound from the specific sound environment in the specific time period at respectively the first sound input location and the second sound input location; and training the machine learning model by executing, by a computer, multiple training rounds spanning the multiple training input sets obtained for the plurality of training users, wherein each training round comprises applying the machine learning model to one of the multiple training input sets obtained for the respective training user and adjusting parameters, such as weights or other parameters, of the machine learning model using the one or more audio spatialization parameters obtained for the respective training user as target output of the machine learning model.

The one or more audio spatialization parameters of the training users may comprise HRTFs of each training user. The HRTFs of each training user may be carefully measured in an audio lab. The HRTFs of each training user may comprise diffuse-field calibrated HRTFs.

The audio data may be input to the machine learning model, such as the neural network, in different formats. For example, the audio signals may be input to the machine learning model, such as the neural network, as complex, e.g. real and imaginary, spectrograms or other suitable representations as described herein.

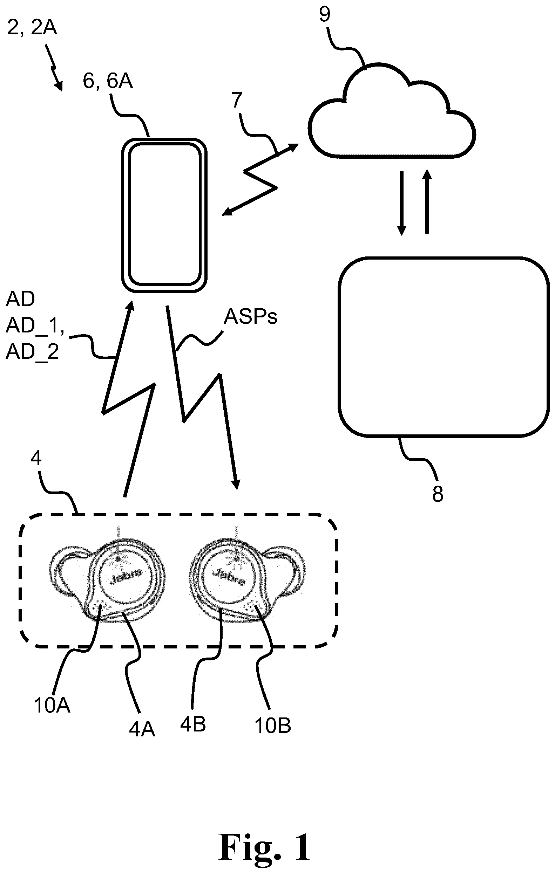

Fig. 1 shows a block diagram of an exemplary audio system. The audio system 2 comprises an audio device 4, an accessory device 6, and a server device 8. The audio device 4 is configured for wireless (as illustrated) or wired communication with the accessory device 6 and transmits audio data AD including first audio data AD_1 and second audio data AD_2 to the accessory device. The audio device 4 is illustrated as a set of earbuds comprising first earbud 4A and second earbud 4B. The first earbud 4A comprises a first microphone 10A configured to be arranged in or at a first ear canal of the target user and provide the first audio data AD_1, and the second earbud 4B comprises a second microphone 10B configured to be arranged in or at a second ear canal of the target user and provide the second audio data AD_2. The accessory device 6 is configured for wireless communication 7 with the server device 8 via network 9.

One or more processors of the accessory device 6 and/or the server device 8 are configured to provide one or more audio spatialization parameters, wherein to provide one or more audio spatialization parameters comprises to apply a model, such as a neural network to the audio data AD for provision of a parameter estimate PE of the one or more audio spatialization parameters ASPs, and determine the one or more audio spatialization parameters ASPs, such as ASP_1 and ASP_2 based on the parameter estimate. One or more processors of the accessory device 6 are configured to output the one or more audio spatialization parameters ASPs, wherein to output the one or more audio spatialization parameters ASPs comprises to transmit the ASPs, such as ASP_1 and ASP_2, to the audio device 4. As illustrated in Fig. 1, the ASPs comprises first ASPs, denoted ASP_1, for the first earbud 4A and second ASPs, denoted ASP_2, for the second earbud 4B. The earbuds 4A, 4B stores and applies ASP_1 and ASP_2, respectively, by providing respective audio outputs based on ASP_1 and ASP_2, respectively. In other words, after determining or receiving the ASPs, the first earbud 4A applies ASP_1 and provides a first audio output based on ASP_1, and the second earbud 4B applies ASP_2 and provides a second audio output based on ASP_2. For instance, the first and second earbuds 4A, 4B may receive respectively a first input audio signal and a second input audio signal for playback to the target user, apply respectively ASP_1 and ASP_2 to the received input audio signals to provide respective first and second spatialized audio output signals for the target user. In this way, the audio device 4 may spatialize input audio signals received from e.g. an accessory device 6 to provide the first and second spatialized audio output signals, based on one or more audio spatialization parameters determined from first and second audio data AD_1, AD_2 provided by the first and second microphones 10A, 10B, respectively, at an earlier time, whereby the first and second spatialized audio output signals may be adapted specifically to the target user.

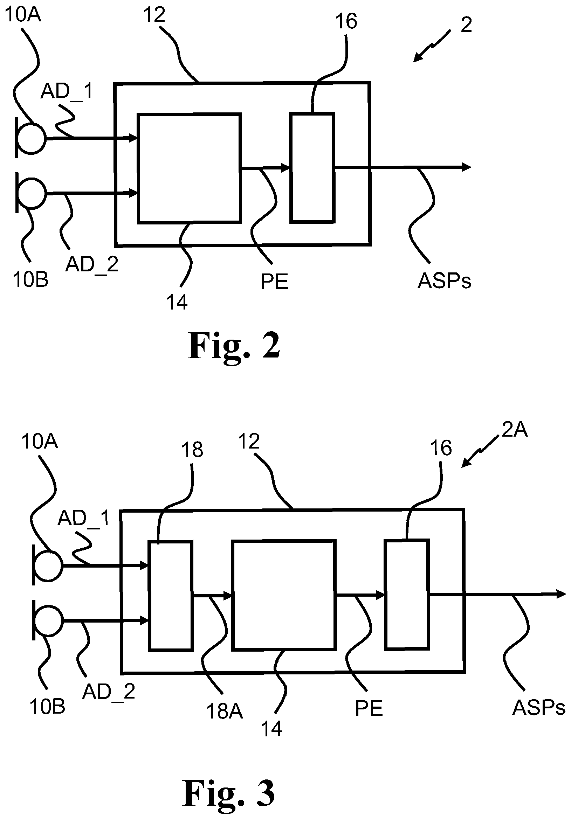

Fig. 2 shows parts of an example audio system 2 in more detail. One or more processors 12 of the audio system 2 obtains audio data AD_1 and AD_2 from respective microphones 10A and 10B and comprises a neural network module 14 with a neural network implementing the model for provision of a parameter estimate PE of the one or more audio spatialization parameters. The parameter estimate PE is fed to ASP controller 16 of the one or more processors 12, and the ASP controller 16 is configured to determine the one or more audio spatialization parameters ASPs based on the parameter estimate PE and output the one or more audio spatialization parameters ASPs.

Fig. 3 shows parts of an example audio system 2A in more detail. The one or more processors 12 of the audio system 2A comprises a pre-processor block 18 for preprocessing the audio data AD_1 and AD_2 for provision of a neural network input 18A to the neural network module 14 based on the audio data AD_1 and AD_2. In the illustrated audio system 2A, the pre-processor block 18 is configured to determine a first real spectrogram also denoted P_R_1, and a first imaginary spectrogram P_I_1 of the first audio data AD_1 of the first microphone 10A and a second real spectrogram also denoted P_R_2, and a second imaginary spectrogram P_I_2 of the second audio data AD_2 of the second microphone 10B and provide the real spectrograms P_R_1, P_R_2 and the imaginary spectrograms P_I_1, P_I 2 as the neural network input 18A.

The pre-processor block 18 is optionally configured to compensate for or remove audio components from respective speakers or loudspeakers near the microphones 10A, 10B. For example, the pre-processor block 18 may be configured to filter the first audio data AD_1 to remove a first speaker audio component, e.g. with an echo canceller/DFS algorithm, from a first speaker arranged in or at the first ear canal of the target user, such as a first speaker of first earbud 4A. The pre-processor block 18 may be configured to filter the second audio data AD_2 to remove a second speaker audio component, e.g. with an echo canceller/DFS algorithm, from a second speaker arranged in or at the second ear canal of the target user, such as a second speaker of second earbud 4B. The pre-processor block 18 may be configured to align or synchronize the first audio data AD_1 and the second audio data AD_2.

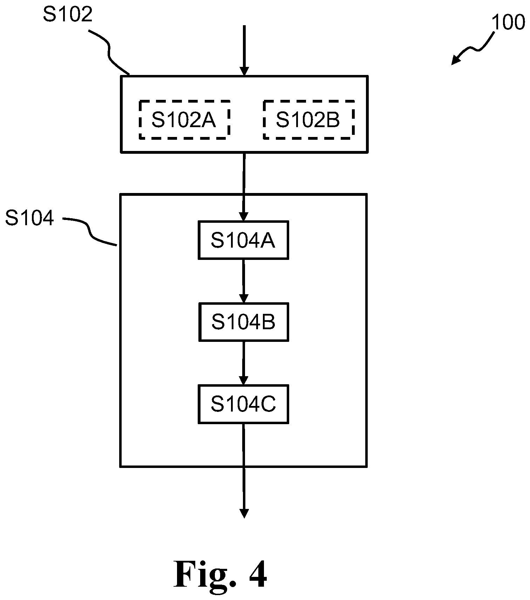

Fig. 4 shows a flow chart of an exemplary method for estimation of one or more audio spatialization parameters for a specific target user. The method 100 comprises obtaining S102 audio data comprising first audio data and second audio data, e.g. with a duration of at least 30 min. Obtaining S102 audio data comprises obtaining S102A first audio data from a first microphone arranged near, in, or at a first ear canal of the target user and obtaining S102B second audio data from a second microphone arranged near, in, or at a second ear canal of the target user. The method 100 proceeds to providing S104 the one or more audio spatialization parameters, wherein providing S104 the one or more audio spatialization parameters comprises applying S104A a model, e.g. using an audio device or an accessory device, to the audio data for provision of a parameter estimate of the one or more audio spatialization parameters; determining S104B the one or more audio spatialization parameters based on the parameter estimate; and outputting S104C the one or more audio spatialization parameters.

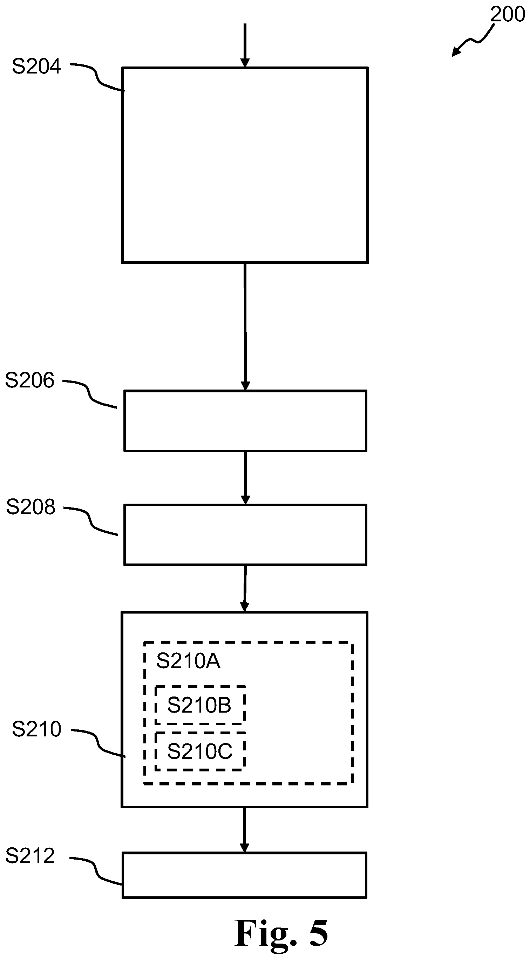

Fig. 5 shows a flow chart of an exemplary method of training a machine learning model, such as a neural network, e.g. for determining or providing a parameter estimate of one or more audio spatialization parameters. The method 200 is a computer-implemented method for training a machine learning model, such as a neural network, e.g. as a CNN, of an audio system, e.g. audio system 2, 2A, to process as input audio data comprising first audio data indicative of a first audio signal from a first microphone and second audio data indicative of a second audio signal from a second microphone and provide as output a parameter estimate of one or more audio spatialization parameters, such as HRTFs, other transfer functions, interaural differences (time and/or level), etc., related to the specific target user of the audio system.

The method 200 comprises obtaining S204, by a computer, for each training user of a plurality of training users, one or more audio spatialization parameters ASPs; obtaining S206, by a computer, for each training user, a first sound input location near, in, or at a first ear canal, such as left ear canal, of the training user and a second sound input location near, in or at a second ear canal, such as right ear canal, of the training user; obtaining S208, by a computer, for each training user, multiple training input sets, wherein each training input set represents a specific sound environment and a specific time period and comprises a first audio input signal and a second audio input signal, each representing environment sound from the specific sound environment in the specific time period at respectively the first sound input location and the second sound input location; and training S210 the machine learning model by executing S210A, by a computer, multiple training rounds spanning the multiple training input sets obtained for the plurality of training users, wherein each training round comprises applying S210B the machine learning model to one of the multiple training input sets obtained for the respective training user and adjusting S210C parameters, such as weights or other parameters, of the machine learning model using the one or more audio spatialization parameters obtained for the respective training user as target output of the machine learning model.

The method 200 optionally comprises applying S212 the machine learning (ML) model or neural network in an audio system, e.g. by storing model parameters of the ML model in an ML model module, such as neural network module 10 of audio system 2, 2A.

In the method 200 some of the method steps required for obtaining S208 training input sets, such as steps that produce the same results for all training rounds, may be executed prior to the training, i.e. prior to executing the first training round, while other steps for obtaining S208 training input may be executed during the training S210, e.g. interleaved with training rounds and/or during training rounds. Obviously, avoiding repetitive computations may preserve both energy and time.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Memory may be one or more of a buffer, a flash memory, a hard drive, a removable media, a volatile memory, a non-volatile memory, a random access memory (RAM), or other suitable device. In a typical arrangement, memory may include a non-volatile memory for long term data storage and a volatile memory that functions as system memory for the processor. Memory may exchange data with processor over a data bus. Memory may be considered a non-transitory computer readable medium.

Memory may be configured to store information (such as information indicative of the neural network, such as configuration and parameters, such as weights or other parameters, thereof) in a part of the memory.

Furthermore, the labelling of a first element does not imply the presence of a second element and vice versa.

It may be appreciated that the figures comprise some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The exemplary operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

The various exemplary methods, devices, and systems described herein are described in the general context of method steps processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

### LIST OF REFERENCES

2 audio system
4 audio device
4A first earbud
4B second earbud
6 accessory device
6A smartphone
7 wireless communication
8 server device
9 network
10A first microphone
10B second microphone
12 one or more processors
14 neural network module
16 ASP controller
18 pre-processor block
18A neural network input
100 method for estimation of one or more audio spatialization parameters for a specific target user
S102 obtaining audio data comprising first and second audio data
S102A obtaining the first audio data from a first microphone arranged near, in, or at a first ear canal of the target user
S102B obtaining the second audio data from a second microphone arranged near, in, or at a second ear canal of the target user
S104 providing the one or more audio spatialization parameters
S104A applying a model to the audio data for provision of a parameter estimate of the one or more audio spatialization parameters;
S104B determining the one or more audio spatialization parameters based on the parameter estimate
S104C outputting the one or more audio spatialization parameters
200 method of training a machine learning model, such as a neural network
S204 determining one or more audio spatialization parameters ASPs for each training user
S206 determining sound input locations
S208 obtaining, for each training user, multiple training input sets
S210 training the machine learning model
S210A executing, by a computer, multiple training rounds spanning the multiple training input sets obtained for the plurality of training users
210B applying the machine learning model to the multiple training input sets obtained for the multiple training users
S210C adjusting parameters, such as weights or other parameters, of the machine learning model using the one or more audio spatialization parameters determined for the respective training user as target output of the machine learning model.
S212 apply machine learning model
AD audio data
AD_1 first audio data
AD_2 second audio data
ASPs audio spatialization parameters
ASP_1 first audio spatialization parameters
ASP_2 second audio spatialization parameters
PE parameter estimate

## Claims

1. A method for estimation of one or more audio spatialization parameters for a specific target user, wherein the method comprises:
obtaining audio data comprising first second audio data by obtaining the first audio data from a first microphone arranged near, in, or at a first ear canal of the target user and the second audio data from a second microphone arranged near, in, or at a second ear canal of the target user; and
providing the one or more audio spatialization parameters comprising:
applying a model to the audio data for provision of a parameter estimate of the one or more audio spatialization parameters;
determining the one or more audio spatialization parameters based on the parameter estimate; and
outputting the one or more audio spatialization parameters.

2. Method according to claim 1, wherein obtaining audio data comprises filtering the first audio data to remove a first speaker audio component from a first speaker arranged in or at the first ear canal of the target user.

3. Method according to any of claims 1-2, wherein obtaining audio data comprises filtering the second audio data to remove a second speaker audio component from a second speaker arranged in or at the second ear canal of the target user.

4. Method according to any of claims 1-3, wherein the method comprises detecting presence of the voice of the target user, and in accordance with detecting presence of the voice, forgoing obtaining audio data.

5. Method according to any of claims 1-4, wherein providing the one or more audio spatialization parameters comprises determining whether the parameter estimate satisfies a first criterion and wherein determining the one or more audio spatialization parameters is performed in accordance with a determination that the first criterion is satisfied.

6. Method according to claim 5, wherein determining whether the parameter estimate satisfies a first criterion comprises determining whether a quality parameter of the parameter estimate meets a threshold.

7. Method according to any of claims 5-6, wherein determining whether the parameter estimate satisfies a first criterion comprises determining a time parameter and determine if the time parameter satisfies a time criterion.

8. Method according to any of claims 1-7, wherein outputting the one or more audio spatialization parameters comprises storing the one or more audio spatialization parameters and/or transmitting the one or more audio spatialization parameters.

9. Method according to any of claims 1-8, wherein the one or more audio spatialization parameters comprise one or more of an interaural level difference, an interaural level difference gram, a condensed interaural level difference gram, a dual logs abs HRTF, an interaural time difference, an interaural time difference gram, and a condensed interaural time difference gram(s).

10. Method according to any of claims 1-9, wherein the model is a neural network configured to receive a first complex spectrogram based on the first audio data as first input and a second complex spectrogram based on the second audio data as second input, the neural network configured to provide an output comprising the parameter estimate based on the first complex spectrogram and the second complex spectrogram.

11. Method according to claim 10, wherein the neural network is a dilated convolutional neural network.

12. A method performed by an electronic device for provision of spatialized audio to a specific target user, wherein the method comprises performing the method according to any of claims 1-11; and providing an audio output based on the one or more audio spatialization parameters.

13. An electronic device comprising one or more processors, wherein the electronic device is configured to perform any of the methods according to any of claims 1-12.

14. Audio system comprising one or more processors, wherein the one or more processors are configured to:
obtain audio data comprising first and second audio data by obtaining the first audio data from a first microphone arranged in or at a first ear canal of the target user and the second audio data from a second microphone arranged in or at a second ear canal of the target user;
provide one or more audio spatialization parameters by:
applying a model to the audio data for provision of a parameter estimate of the one or more audio spatialization parameters, and
determining the one or more audio spatialization parameters based on the parameter estimate; and
output the one or more audio spatialization parameters.

15. A computer-implemented method for training a machine learning model to process as input audio data comprising first audio data indicative of a first audio signal from a first microphone and second audio data indicative of a second audio signal from a second microphone and provide as output a parameter estimate of one or more audio spatialization parameters, wherein the method comprises:
obtaining, by a computer, for each training user of a plurality of training users, one or more audio spatialization parameters;
obtaining, by a computer, for each training user, a first sound input location near, in, or at a first ear canal of the training user and a second sound input location near, in or at a second ear canal of the training user;
obtaining, by a computer, for each training user, multiple training input sets, wherein each training input set represents a specific sound environment and a specific time period and comprises a first audio input signal and a second audio input signal, each representing environment sound from the specific sound environment in the specific time period at respectively the first sound input location and the second sound input location; and
training the machine learning model by executing, by a computer, multiple training rounds spanning the multiple training input sets obtained for the plurality of training users, wherein each training round comprises applying the machine learning model to one of the multiple training input sets obtained for the respective training user and adjusting parameters, such as weights or other parameters, of the machine learning model using the one or more audio spatialization parameters obtained for the respective training user as target output of the machine learning model.
